# EUROPÄISCHE PATENTANMELDUNG

(11) **EP 2 626 578 A1**
(43) Veröffentlichungstag der Anmeldung: **14.08.2013**
(21) Anmeldenummer: 13152299.7
(22) Anmeldetag: 23.01.2013
(51) Int. Cl.: F16C 33/10, F16C 33/12, F16C 33/14

(54) **Gleitlageranordnung**

(30) Priorität: 10.02.2012 DE 102012002727
(71) Anmelder: ROBERT BOSCH GMBH, 70442 Stuttgart (DE)
(72) Erfinder: Gaertner, Bernd, 89194 Schnuerpflingen (DE)
(74) Vertreter: Thürer, Andreas

(57) **Zusammenfassung**

Die Erfindung bezieht sich auf eine Gleitlageranordnung mit einer Beschichtung (2) aus einem Gleitwerkstoff geringerer Härte auf einer Fläche eines ersten Bauteils (1), wobei die freie Fläche der Beschichtung eine erste Gleitfläche (3) bildet, die gleitbar dicht an einer zweiten Gleitfläche (4) eines zweiten Bauteils (5) in Anlage ist. Die Beschichtung des ersten Bauteils (1) besteht aus einem bleifreien Gleitwerkstoff und das zweite Bauteil (5) aus einem Werkstoff größerer Härte als der Härte der Beschichtung des ersten Bauteils (1). Dabei weist die Gleitfläche des zweiten Bauteils (5) eine Vielzahl über die Gleitfläche verteilte näpfchenartige Vertiefungen (6) auf.

## Beschreibung

Die Erfindung bezieht sich auf eine Gleitlageranordnung mit einer Beschichtung aus einem Gleitwerkstoff geringerer Härte auf einer Fläche eines ersten Bauteils, wobei die freie Fläche der Beschichtung eine erste Gleitfläche bildet, die gleitbar dicht an einer zweiten Gleitfläche eines zweiten Bauteils in Anlage ist.

Bei Axialkolbenmaschinen verbindet eine Steuerscheibe abwechselnd Zylinder einer sich drehenden Zylindertrommel mit einer Hydraulikflüssigkeit führenden Hochdruck-und Niederdruckarbeitsleitung.

Die Zylindertrommel gleitet auf der Steuerscheibe. Die Zylindertrommel muß stark gegen die Steuerscheibe gedrückt werden, um bei den hohen auftretenden Arbeitsdrücke unnötige Hydraulikflüssigkeitsverluste zu vermeiden.

Um die Reibung zwischen dem ersten und zweiten Bauteil zu verringern, die durch den hohen Druck, mit dem die Zylindertrommel gegen die Steuerscheibe gedrückt wird, entsteht, ist das erste Bauteil mit der Beschichtung aus einem Gleitwerkstoff versehen. Dieser Gleitwerkstoff besteht in der Regel aus einem Kupferbasiswerkstoff mit Bleizusätzen. Da das Blei mit diesen Werkstoffen weder im festen noch im flüssigen Zustand mischbar ist, liegt es als kugelförmige Bleieinschlüsse vor. Diese Diese schmelzen bei hohen Betriebstemperaturen und werden auf diese Weise entfernt. An den Stellen bilden sich in der Beschichtung näpfchenartige Vertiefungen, die der Struktur der vorherigen Einschlüsse entsprechen. Die Beschichtung selbst ist weich und dadurch fähig, Partikel aus Abrieb einzubetten und fertigungs- sowie betriebsbedingte Verformungen durch Verschleiß auszugleichen.

Diese Bleizusätze führen bei ihrem Verschleiß zu einer Belastung der Umwelt.

Aufgabe der Erfindung ist es daher eine einfach aufgebaute Gleitlageranordnung der eingangs genannten Art zu schaffen, die eine derartige Belastung der Umwelt vermeidet.

Diese Aufgabe wird erfindungsgemäß dadurch gelöst, dass die Beschichtung des ersten Bauteils aus einem bleifreien Gleitwerkstoff und das zweite Bauteil aus einem Werkstoff größerer Härte als der Härte der Beschichtung des ersten Bauteils besteht, wobei die Gleitfläche des zweiten Bauteils eine Vielzahl über die Gleitfläche verteilte näpfchenartige Vertiefungen aufweist.

Im Betrieb der Gleitlageranordnung kann sich Schmierstoff in die näpfchenartigen Vertiefungen einsetzen und für eine Reduzierung der Reibung zwischen den beiden Gleitpartnern sorgen. Auf die Verwendung von Blei wird verzichtet, so dass auch keine Umweltbelastung durch Blei möglich ist.

Da der bleifreie Gleitwerkstoff eine hohe Festigkeit und das zweite Bauteil eine große Härte aufweist, ist die Gleitlageranordnung auch hoch belastbar.

Die hohe Härte des zweiten Bauteils führt außerdem auch zu einem geringeren Verschleiß des zweiten Bauteils und damit zu einer höheren Standzeit der Gleitlageranordnung.

Bestehen das erste Bauteil und/oder das zweite Bauteil aus Eisen oder einer Eisenlegierung, so sind diese Bauteile hoch belastbar.

Gute Lagereigenschaften mit hoher Festigkeit werden dadurch erreicht, dass der Gleitwerkstoff der Beschichtung des ersten Bauteils eine bleifreie Bronze oder ein anderer bleifreier Gleitlagerwerkstoff ist.

Die näpfchenartigen Vertiefungen können in einfacher Weise am zweiten Bauteil durch ein materialabhebendes Verfahren erzeugt sein, wobei die näpfchenartigen Vertiefungen durch ein spanabhebendes Verfahren oder ein Ätzverfahren oder ein Laserverfahren erzeugbar sein können.

Eine andere Möglichkeit zur Erzeugung der näpfchenartigen Vertiefungen besteht darin, dass das zweite Bauteil aus einem Werkstoff besteht, in dem in entsprechenden Aufnahmekammern eine Vielzahl von Einschlüssen verteilt enthalten sind, wobei die an der Gleitfläche nach außen freien Einschlüsse aus den Aufnahmekammern des zweiten Bauteils auslösbar sind und die Aufnahmekammern der ausgelösten Einschlüsse die näpfchenartigen Vertiefungen bilden.

Das Auslösen der Einschlüsse kann z.B. dadurch erfolgen, dass sie im Betrieb der Gleitlageranordnung durch Schmierstoff gelöst und/oder aus den Aufnahmekammern herausgespült werden.

Dazu sind vorteilhafterweise die Einschlüsse Kugelgraphit.

Besteht dabei das zweite Bauteil aus einem Gusseisen mit Kugelgraphit (EN 1563) oder einem ausferritischen Gusseisen mit Kugelgraphit (EN 1564), so wird dabei auch noch eine große Härte und Verschleißbeständigkeit des zweiten Bauteils erreicht.

Die erste Gleitfläche und die zweite Gleitfläche können ebene Gleitflächen sein.

In einer Ausführung kann dabei das erste Bauteil eine Steuerplatte oder eine rotierende Zylindertrommel einer hydraulischen Axialkolbenmaschine sein und die erste Gleitfläche an der Steuerplatte oder der Zylindertrommel sowie die zweite Gleitfläche an der Zylindertrommel oder der Steuerplatte der Axialkolbenmaschine angeordnet sein.

Es ist aber auch möglich, dass die erste Gleitfläche und die zweite Gleitfläche zueinander konzentrische Gleitflächen sind, wobei das erste Bauteil ein Kolben und das zweite Bauteil ein Zylinder einer Kolben-Zylindereinheit sein können und die erste Gleitfläche an der radial umlaufenden Mantelfläche des Kolbens oder an der zylindrischen Innenfläche des Zylinders sowie die zweite Gleitfläche an der zylindrischen Innenfläche des Zylinders oder an der radial umlaufenden Mantelfläche des Kolbens angeordnet sind.

Ein Ausführungsbeispiel der Erfindung ist in der Zeichnung dargestellt und wird im folgenden näher beschrieben. Es zeigen
- Fig. 1: einen Querschnitt eines ersten Ausführungsbeispiels der Gleitlagerteile einer Gleitlageranordnung
- Fig. 2: einen Querschnitt eines ersten Ausführungsbeispiels der Gleitlagerteile einer Gleitlageranordnung.

Die in den Figuren dargestellten Gleitlageranordnungen weisen einen Grundkörper als erstes Bauteil 1 auf, das z.B. eine Steuerplatte einer hydraulischen Axialkolbenmaschine sein kann. Dieses erste Bauteil 1 kann aus Stabilitätsgründen aus Stahl bestehen.

Auf dem ersten Bauteil 1 ist eine Beschichtung 2 aus einer bleifreien Bronze fest angeordnet, deren dem ersten Bauteil 1 abgewandte freie Fläche eine ebene erste Gleitfläche 3 bildet.

An dieser ersten Gleitfläche 3 liegt eine ebene zweite Gleitfläche 4 eines zweiten Bauteils 5 an, das aus einem eisenhaltigen Werkstoff hoher Härte besteht und somit eine hohe Verschleißfestigkeit besitzt. Das zweite Bauteil 5 kann eine Zylindertrommel der Axialkolbenmaschine sein.

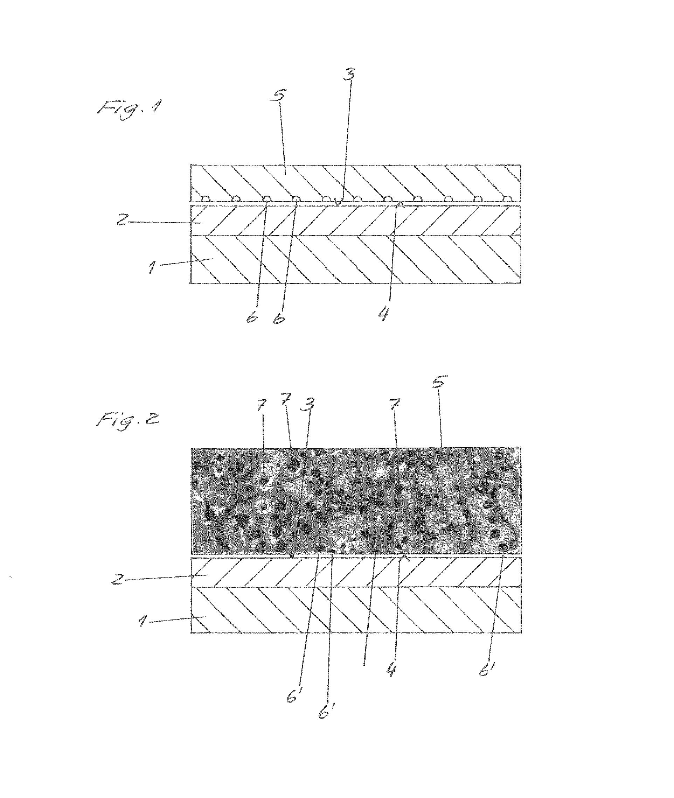

Bei dem Ausführungsbeispiel der Figur 1 besteht das zweite Bauteil 5 aus einer Eisenlegierung. Durch ein Laserverfahren sind in der zweiten Gleitfläche 4 über die zweite Gleitfläche 4 verteilt eine Vielzahl näpfchenartige Vertiefungen 6 ausgebildet, die eine Breite in der Größenordnung von 100 µm aufweisen. Es versteht sich, dass die Breite auch geringer, z.B. 10-20 µm, aber auch größer, z.B. 200 µm sein kann.

Bei dem Ausführungsbeispiel der Figur 2 besteht das zweite Bauteil 5 ebenfalls aus einer Eisenlegierung, in der aber verteilt Einschlüsse 7 von Graphit, insbesondere von Kugelgraphit enthalten sind, die Aufnahmekammern in dem zweiten Bauteil 5 ausfüllen.

Die Einschlüsse 7 der an der zweiten Gleitfläche 4 nach außen mündenden Aufnahmekammern sind aus den Aufnahmekammern ausgelöst, so dass diese nach außen mündenden Aufnahmekammern näpfchenartige Vertiefungen 6' bilden.

Im Betrieb der Axialkolbenmaschine rotiert das zweite Bauteil 5 mit seiner zweiten Gleitfläche 4 auf der ersten Gleitfläche 3 des ersten Bauteils 1. Zwischen den Gleitflächen 3 und 4 vorhandenes Schmiermittel wie Hydrauliköl setzt sich in die näpfchenartigen Vertiefungen 6, 6', die als Schmierstoffreservoirs bei Schmierstoffmangel oder Mischreibung dienen.

## Patentansprüche

1. Gleitlageranordnung mit einer Beschichtung aus einem Gleitwerkstoff geringerer Härte auf einer Fläche eines ersten Bauteils, wobei die freie Fläche der Beschichtung eine erste Gleitfläche bildet, die gleitbar dicht an einer zweiten Gleitfläche eines zweiten Bauteils in Anlage ist, **dadurch gekennzeichnet,**
**dass** die Beschichtung (2) des ersten Bauteils (1) aus einem bleifreien Gleitwerkstoff und das zweite Bauteil (5) aus einem Werkstoff größerer Härte als der Härte der Beschichtung (2) des ersten Bauteils (1) besteht, wobei die Gleitfläche (4) des zweiten Bauteils (5) eine Vielzahl über die Gleitfläche (4) verteilte näpfchenartige Vertiefungen (6, 6') aufweist.

2. Gleitlageranordnung nach Anspruch 1, **dadurch gekennzeichnet, dass** das erste Bauteil (1) und/oder das zweite Bauteil (5) aus Eisen oder einer Eisenlegierung bestehen.

3. Gleitlageranordnung nach einem der vorhergehenden Ansprüche, **dadurch gekennzeichnet, dass** der Gleitwerkstoff der Beschichtung (2) des ersten Bauteils (1) eine bleifreie Bronze oder ein anderer bleifreier Gleitlagerwerkstoff ist.

4. Gleitlageranordnung nach einem der vorhergehenden Ansprüche, **dadurch gekennzeichnet, dass** die näpfchenartigen Vertiefungen (6) durch ein materialabhebendes Verfahren erzeugt sind.

5. Gleitlageranordnung nach Anspruch 7, **dadurch gekennzeichnet, dass** die näpfchenartigen Vertiefungen (6) durch ein spanabhebendes Verfahren oder ein Ätzverfahren oder ein Laserverfahren erzeugbar sind.

6. Gleitlageranordnung nach einem der Ansprüche 1 bis 3, **dadurch gekennzeichnet, dass** das zweite Bauteil (5) aus einem Werkstoff besteht, in dem in entsprechenden Aufnahmekammern eine Vielzahl von Einschlüssen (7) verteilt enthalten sind, wobei die an der Gleitfläche (4) nach außen freien Einschlüsse (7) aus den Aufnahmekammern des zweiten Bauteils (5) auslösbar sind und die Aufnahmekammern der ausgelösten Einschlüsse (7) die näpfchenartigen Vertiefungen (6') bilden.

7. Gleitlageranordnung nach Anspruch 6, **dadurch gekennzeichnet, dass** die Einschlüsse (7) Kugelgraphit sind.

8. Gleitlageranordnung nach Anspruch 7, **dadurch gekennzeichnet, dass** das zweite Bauteil aus einem Gusseisen mit Kugelgraphit oder aus einem ausferritischen Gußeisen mit Kugelgraphit besteht.

9. Gleitlageranordnung nach einem der vorhergehenden Ansprüche, **dadurch gekennzeichnet, dass** die erste Gleitfläche (3) und die zweite Gleitfläche (4) ebene Gleitflächen sind.

10. Gleitlageranordnung nach Anspruch 9, **dadurch gekennzeichnet, dass** das erste Bauteil (1) eine Steuerplatte oder eine rotierende Zylindertrommel (3) einer hydraulischen Axialkolbenmaschine ist und die erste Gleitfläche (3) an der Steuerplatte oder der Zylindertrommel sowie die zweite Gleitfläche (4) an der Zylindertrommel oder der Steuerplatte der Axialkolbenmaschine angeordnet sind.

11. Verfahren nach einem der Ansprüche 1 bis 8, **dadurch gekennzeichnet, dass** die erste Gleitfläche und die zweite Gleitfläche zueinander konzentrische Gleitflächen sind.

12. Verfahren nach Anspruch 11, **dadurch gekennzeichnet, dass** das erste Bauteil ein Kolben und das zweite Bauteil ein Zylinder einer Kolben-Zylindereinheit sind und die erste Gleitfläche an der radial umlaufenden Mantelfläche des Kolbens oder an der zylindrischen Innenfläche des Zylinders sowie die zweite Gleitfläche an der zylindrischen Innenfläche des Zylinders oder an der radial umlaufenden Mantelfläche des Kolbens angeordnet sind.
